# EUROPEAN PATENT SPECIFICATION

(11) **EP 1 979 397 B1**
(45) Date of publication and mention of the grant of the patent: **07.09.2011**
(21) Application number: 06851766.3
(22) Date of filing: 22.11.2006
(51) Int. Cl.: C08L 79/04, C08G 73/06

(54) **SHAPE MEMORY CYANATE ESTER COPOLYMERS**
FORMGEDÄCHTNIS-CYANATESTERCOPOLYMERE
COPOLYMÈRES D'ESTER DE CYANATE À MÉMOIRE DE FORME

(30) Priority: 22.11.2005 US 738938 P
(43) Date of publication of application: 15.10.2008
(73) Proprietor: CORNERSTONE RESEARCH GROUP, INC., Dayton, OH 45440 (US)
(72) Inventor: HREHA, Richard J., Beavercreek, OH 45431 (US); VINING, Benjamin John, Dayton, OH 45439 (US); SCHUELER, Robert M., Centerville, OH 45458 (US); NICKERSON, David, Jeju 697-080 (KR)
(74) Representative: Gervasi, Gemma
(86) International application number: PCT/US2006/045088
(87) International publication number: WO 2008/051241

(56) References cited:
- WO-A-2005/108448
- US-A- 585 602
- US-A1- 2002 161 114

## Description

### 1. Technical Field

The present invention is directed to shape memory polymers (SMPs), their production and use. More particularly, the current invention comprises a reaction product of a mono-functional cyanate ester with at least one amine terminated molecule; this mixture is then further mixed with a difunctional cyanate ester resulting in the SMP having a cross-linked thermoset network. Additionally the current invention incorporates the element Silicone into the cross-linked network to take advantage of the flexible bonds that Silicone creates to enhance the shape memory effect seen in the presented shape memory polymer.

The present invention is specifically drawn toward space applications as cyanate ester is already an approved compound for use in space applications. The need for an SMP that is approved for use in space is obvious to those that work in the space field. A material that can be compacted for launch and then unfolded in space while maintaining high toughness and being lightweight would significantly reduce the costs of sending objects into space. The present invention is also drawn to a shape memory polymer thermosetting resin having compatibility with polymers employed in high temperature, high strength and high tolerance processes in manufacturing.

### 2. Background Art

Shape memory materials are materials capable of distortion above their glass transition temperatures (T_{g}s), storing such distortion at temperatures below their T_{g} as potential mechanical energy in the material, and release this energy when heated again to above the T_{g}, returning to their original "memory" shape.

The first materials known to have these properties were shape memory metal alloys (SMAs), including TiNi (Nitinol), CuZnAl, and FeNiAl alloys. These materials have been proposed for various uses, including vascular stents, medical guide wires, orthodontic wires, vibration dampers, pipe couplings, electrical connectors, thermostats, actuators, eyeglass frames, and brassiere underwires. With a temperature change of as little as 10° C, these alloys can exert a stress as large as 415 MPa when applied against a resistance to changing its shape from its deformed shape. However, these materials have not yet been widely used, in part because they are relatively expensive.

Shape memory polymers (SMPs) are being developed to replace or augment the use of SMAs, in part because the polymers are light weight, high in shape recovery ability, easy to manipulate, and economical as compared with SMAs. SMPs are materials capable of distortion above their glass transition temperature (T_{g}, storing such distortion at temperatures below their T_{g} as potential mechanical energy in the polymer, and release this energy when heated to temperatures above their T_{g}, returning to their original memory shape. When the polymer is heated to near its transition state it becomes soft and malleable and can be deformed under resistances of approximately 1 MPa modulus. When the temperature is decreased below its T_{g}, the deformed shape is fixed by the higher rigidity of the material at a lower temperature while, at the same time, the mechanical energy expended on the material during deformation will be stored. Thus, favorable properties for SMPs will closely link to the network architecture and to the sharpness of the transition separating the rigid and rubbery states.

Heretofore, numerous polymers have been found to have particularly attractive shape memory effects, most notably the polyurethanes, polynorbomene, styrene-butadiene copolymers, and cross-linked polyethylene.

In literature, SMPs are generally characterized as phase segregated linear block co-polymers having a hard segment and a soft segment, see for example, U.S. Pat. No. 6,720,402 issued to Langer and Lendlein on April 13, 2004. As described in Langer, the hard segment is typically crystalline, with a defined melting point, and the soft segment is typically amorphous, with a defined glass transition temperature. In some embodiments, however, the hard segment is amorphous and has a glass transition temperature rather than a melting point. In other embodiments, the soft segment is crystalline and has a melting point rather than a glass transition temperature. The melting point or glass transition temperature of the soft segment is substantially less than the melting point or glass transition temperature of the hard segment. Examples of polymers used to prepare hard and soft segments of known SMPs include various polyacrylates, polyamides, polysiloxanes, polyurethanes, polyethers, polyether amides, polyurethane/ureas, polyether esters, and urethane/butadiene copolymers.

The limitations with these are other existing shape memory polymers lie in the thermal characteristics and tolerances of the material. The T_{g} of a material may be too low for the conditions in which the system will reside, leading to the material being incapable of activation. An example of such a situation is an environment with an ambient temperature exceeding the transition temperature of the SMP; such a climate would not allow the polymer to efficiently make use of its rigid phase. Additionally, current organic systems from which SMPs are synthesized are not capable of operating in adverse environments that degrade polymeric materials. An example of such an environment is low earth orbit, where intense radiation and highly reactive atomic oxygen destroy most organic materials.

Applications for a shape memory material capable of withstanding these harsh conditions as well as higher thermal loads include, but are not limited to; morphing aerospace structures and space compatible polymers capable of self-actuation and dampening.

As discussed in Langer, SMP can be reshaped and reformed multiple times without losing its mechanical or chemical properties. When the SMP described by Langer is heated above the melting point or glass transition temperature of the hard segment, the material can be shaped. This (original) shape can be memorized by cooling the SMP below the melting point or glass transition temperature of the hard segment. When the shaped SMP is cooled below the melting point or glass transition temperature of the soft segment while the shape is deformed, a new (temporary) shape is fixed. The original shape is recovered by heating the material above the melting point or glass transition temperature of the soft segment but below the melting point or glass transition temperature of the hard segment. The recovery of the original shape, which is induced by an increase in temperature, is called the thermal shape memory effect. Properties that describe the shape memory capabilities of a material are the shape recovery of the original shape and the shape fixity of the temporary shape.

Conventional shape memory polymers generally are segmented polyurethanes and have hard segments that include aromatic moieties. U.S. Pat. No. 5,145,935 to Hayashi, for example, discloses a shape memory polyurethane elastomer molded article formed from a polyurethane elastomer polymerized from of a difunctional diiiosicyanate, a difunctional polyol, and a difunctional chain extender.

Examples of additional polymers used to prepare hard and soft segments of known SMPs include various polyethers, polyacrylates, polyamides, polysiloxanes, polyurethanes, polyether amides, polyurethane/ureas, polyether esters, and urethane/butadiene copolymers. See, for example, U. S. Pat. No. 5,506,300 to Ward et al.; U.S. Pat. No. 5,145,935 to Hayashi; and U.S. Pat. No. 5,665,822 to Bitler et al. Document US 2002/161114 describes instead polyurethane and polyurethane-urea polymers having shape memory characteristics.

Several physical properties of SMPs other than the ability to memorize shape are significantly altered in response to external changes in temperature and stress, particularly at the melting point or glass transition temperature of the soft segment. These properties include the elastic modulus, hardness, flexibility, vapor permeability, damping, index of refraction, and dielectric constant. The elastic modulus (the ratio of the stress in a body to the corresponding strain) of an SMP can change by a factor of up to 200 when heated above the melting point or glass transition temperature of the soft segment. Also, the hardness of the material changes dramatically when the soft segment is at or above its melting point or glass transition temperature. When the material is heated to a temperature above the melting point or glass transition temperature of the soft segment, the damping ability can be up to five times higher than a conventional (1) Document WO 2005/108448 discloses cyanate ester shape memory polymers formed via reaction of multifunctional cyanate ester and a mono functional cyanate ester in the form of a cross-linked thermoset network. rubber product. The material can readily recover to its original molded shape following numerous thermal cycles, and can be heated above the melting point of the hard segment and reshaped and cooled to fix a new original shape.

Recently, SMPs have been created using reactions of different polymers to eliminate the need for a hard and soft segment, creating instead, a single piece of SMP. The advantages of a polymer consisting of a single crosslinked network, instead of multiple networks are obvious to those of skill in the art. The presently disclosed invention uses this new method of creating SMPs. U.S. Pat. No. 6,759,481 discloses such a SMP using a reaction of styrene, a vinyl compound, a multifunctional crosslinking agent and an initiator to create a styrene based SMP.

The industrial use of SMPs has been limited because of their low transition temperatures. Cyanate esters are a unique class of material which possesses attractive thermal and mechanical properties. In applications where high rigidity and high temperature resistant materials are needed, cyanate esters demonstrate compatibility by maintaining their rigid glassy modulus at high temperature as well as possessing a stable chemical structure resistant to conditions such as oxidation and radiation exposure. Cyanate esters polymerize thermally producing a highly dense crosslinked network. Typically these thermoset cyanate ester networks are rigid and have low strain capability. By altering this network system, it is possible to produce a lightly crosslinked network still possessing many of the original materials properties but with the functionality of a shape memory polymer. Currently there is no shape memory polymer capable of withstanding very high temperatures and pressures for use in industrial applications. Thus there is a need for a SMP that can be used at the high temperatures used in manufacturing processes. Because Cyanate Esters are already a space qualified material, the present invention would be highly useful for space applications because it is lightweight, strong, and has the ability to change shape.

High temperature, high toughness thermoset resins with shape memory characteristics are not currently available. Additionally, according to the literature incorporating alkyl primary amines into cyanate ester networks is thought uncontrollable due to the almost immediate formation of an unprocessable network as stated in Curing of Cyanates with Primary Amines, Macromol. Chem. Phys. 2001, 202, 2213-2220. This invention develops a processing technique that circumvents this problem and yields an easily processable high temperature, high toughness thermoset resin.

Other high temperature, high toughness, thermoset resins do not have shape memory. Typically, cyanate esters do not exhibit the shape memory effect mentioned above. In order to exhibit this shape memory effect Cyanate Ester resins must be crosslinked in a manner different from normal Cyanate Ester Resins. It is this new method of crosslinking Cyanate Ester Resins that is highly sought after.

One cyanate ester resin that does exhibit the desired shape memory effect is described in application PCT/US05/15685, filed May 5, 2005 to Tat Tong. However, this resin does not have the toughness exhibited in the new material prepared according to this aforementioned novel processing technique.

### BRIEF SUMMARY OF THE INVENTION

The present invention relates to a shape memory polymer (SMP) prepared from a reaction mixture comprising a monofunctional cyanate ester monomer and at least one amine terminated molecule, according to the subject-matter of claim 1. Claim 7 provides a method of preparation of the same polymer.
The Cyanate Ester based shape memory polymers (SMPs) with a high glass transition temperature (T_{g}) that are described in this invention are well adapted for industrial use in making SMP Molds, as set forth in U.S. Pat. No. 6,986,855 issued to Hood and Havens on January 17, 2006, or for use in other industrial and manufacturing processes.

As previously stated, SMPs are a unique class of polymers that can harden and soften quickly and repetitively on demand. This feature provides the ability to soften temporarily, change shape, and harden to a solid structural shape in various new highly detailed shapes and forms. SMPs have a very narrow temperature span in which they transition from hard to soft and back again. By using different combinations of mono-functional cyanate ester, one molecule terminated with a moiety containing an active hydrogen, and the difunctional cyanate ester resulting in the SMP having a cross-linked thermoset network in addition to structural modifiers and catalyst the T_{g} of the final SMP can be tailored to any desired temperature. Additionally it is possible to manufacture the SMP such that the activation of the SMP occurs over a very narrow temperature range, typically less than 5 degrees Celsius. This narrow glass transition temperature (Tg) range is a key property that allows a SMP to maintain full structural rigidity up to the specifically designed activation temperature. SMPs possessing high Tg, such as described here, are particularly useful in applications that will change shape at some stage but need the structure to state rigid at higher operating temperatures, typically greater than 0°C, such as morphing aerospace structures and SMP molding processes.

In accordance with the invention, a new SMP with high transition temperature capability has now been developed.

In accordance with the present invention, the SMPs are a reaction product of at least one monofunctional cyanate ester monomer, at least one amine terminated molecule, and at least one difunctional cyanate ester monomer. The polymerization of the reaction of these monomers forms a castable shape memory polymer with a glass transition temperature higher than 0°C. The reaction creates a crosslinking between the monomers such that during polymerization they form a crosslinked thermoset network.

### BRIEF DESCRIPTION OF DRAWINGS

Figure 1 shows the reaction of a monofunctional cyanate ester resin with an amine terminated dimethylsiloxane.

Figure 2 shows the scheme by which the reaction is most likely to achieve cyclic trimerization.

### DETAILED DESCRIPTION OF THE INVENTION

Generally, shape memory polymers (SMPs) are comprised of two essential components; the back bone polymer, which is comprised of monomeric constituents that undergo polymerization to produce polymers possessing specific glass transition temperatures (T_{g}s), and a crosslinking agent. The mixture of monomers can be formulated so that the glass transition temperatures can be tuned to meet different operational needs for specific applications. In cyanate ester materials, the monomer functional groups tri-polymerize, forming a highly crosslinked network synonymous with crosslinked thermosetting systems.

Cyanate ester monomers possessing dual functionality are those most commonly used to produce such thermosetting resins. Different cyanate ester monomers can polymerize with one another, yielding a polymer with a blend of characteristics from the unique polymeric components. When a cyanate ester monomer possessing only one functional group is added to the resin, these monofunctional monomers react via the tri-polymerization with the multifunctional monomers, causing a reduction in the extent of crosslinking in the network by "capping" the polymerization sites. This will cause an increase in the length of the polymer chains between crosslink sites, modifying the material to one whose system more closely resembles a conventional SMP.

This invention covers a new methodology to produce high performance, high temperature, thermoset resins having shape memory characteristics based on Cyanate Ester resins. This novel methodology eclipses current cyanate ester technology based on pericyclic polycyclotrimerizations by utilizing a heretofore unknown polymerization mechanism based on equilibrium controlled condensation and cyclization. A monofunctional cyanate ester resin is reacted with at least one amine terminated molecule. One example of such molecules are amine terminated dimethylsiloxane (ATS). The resulting compound is heated and reacted with a difunctional cyanate ester resin and cured. The T_{g} of the SMP can be matched to specific requirements by adjusting the ratio of the previous said elements and/or the addition of other agents to adjust the physical properties of the final cyanate ester based SMP.

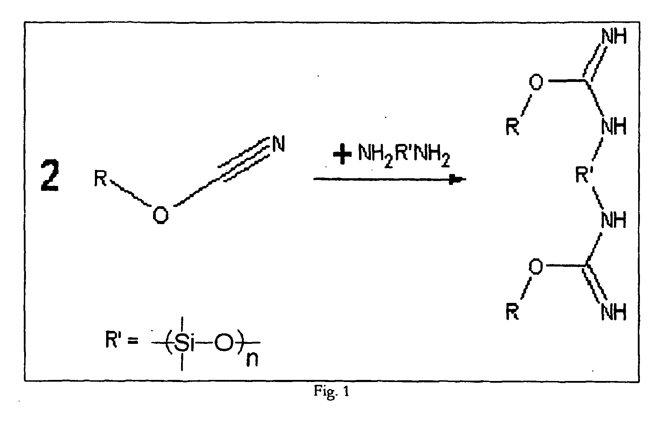

Making the disclosed SMP involves first reacting any monofunctional cyanate ester resin with at least one amine terminated molecule. These molecules have active hydrogen atoms which react with cyanate groups via nucleophilic addition to form a stable system of isourea ethers and its adduct imides. The preferred molecule to use is an ATS and a monofunctional cyanate ester resin as shown in Figure 1 which shows the reaction of a monofunctional cyanate ester resin with an amine terminated dimethylsiloxane.

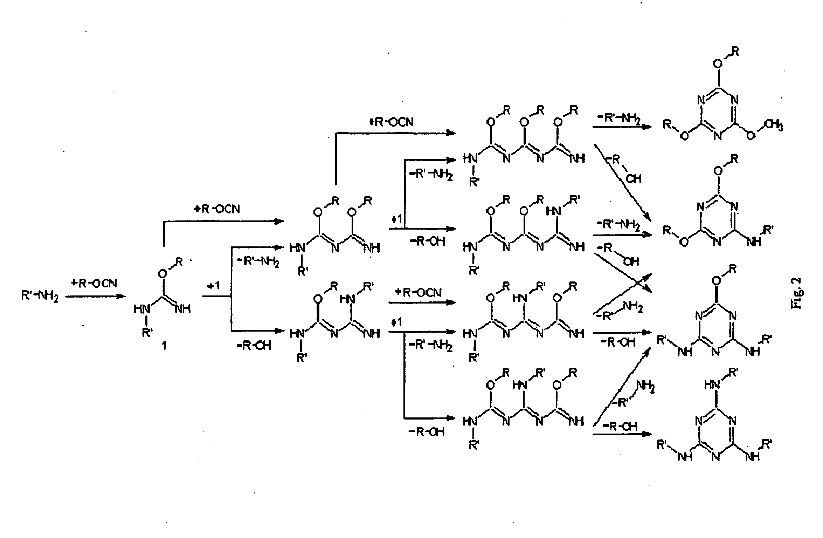

After this reaction has reached equilibrium, a difunctional cyanate ester resin is added and the mixture is heated to approximately 200°C and mixed thoroughly. During this phase the reaction most likely achieves cyclic trimerization according to the reaction scheme shown in Figure 2. The resulting mixture is then cured at 200°C for approximately 12 hours followed by a cure time of 2-4 hours at 250°C in various geometric sizes depending on the desired final size and shape. This is a general cure cycle that can be optimized depending on the type and ratio of materials used.

The preferred amine terminated molecules are ATS molecules. The incorporation of Silicone into the cyanate ester is particularly important to the shape memory effect seen in the present discovery. The chemical nature of Silicone allows for greater flexibility due to the length of the silicon oxygen bonds. Additionally the addition of elastomeric materials frequently results in a tougher material. Therefore the addition of ATS allows the final product to have more shape memory effects than traditional cyanate ester resins and, in addition, the Silicone adds to the toughness of the final resin. In accordance with the greater flexibility of these bonds, the most desired results of the reaction are the mono- and di- substituted amine-siloxane triazine rings seen in Fig. 2.

While Silicone is the preferred material to incorporate into the cyanate ester resin matrix, it is possible to add any other material capable of forming organic bonds into the cyanate ester resin to vary the physical properties of the final product. Silicone is the preferred material in this application however any amine terminated material, capable of undergoing the reactions seen in Figure 2 may be able to be employed to vary the physical properties of the final product. Alternative materials may include functionalized rubbers such as poly(butadiene) or poly(ethers).

Several amine terminated polydimethyl siloxanes are commercially available in different chain lengths, and any of these polymers can be used in the process mentioned above. Also, any amine terminated molecule can be substituted for the amine terminated siloxane. Several monofunctional cyanate ester resins are commercially available, and any of these may also be used in process mentioned above. Finally, many difunctional cyanate ester resins are commercially available and any one of these can be used in the process mentioned above.

The monofunctional cyanate ester monomer must have only one cyanate ester moiety per molecule. Some examples of monofunctional cyanate ester monomers include, but are not limited to, 4-methoxyphenyl cyanate ester, 4-nonylphenyl cyanate, 4-phenylphenyl cyanate, 4-cumylphenol cyanate ester, and phenyl cyanate.

Additionally the choice of which amine terminated molecule to use allows for the SMP to be designed for a specific T_{g}, toughness, and flexibility depending on the desired specification. These structural modifiers can be used with or without a catalyst. Examples of amine terminated molecules include but not limited to those listed below as well as their fluorinated derivatives: 1,2-diaminopropane; 1,3-diaminopropane; 1,4-diaminobutane; 1,5-diaminopentane; 2,2-dimethyl-1,3-propanediamine; hexamethylenediamine; dytek A amine; 1,7-diaminoheptane; 1,8-diaminooctane; 1,9-diaminononane; 1,10-diaminodecane; 1,12-diaminododecane; *N-*methylethylenediamine; *N*-ethylethylenediamine; *N*-propylethylethylenediamine; *N-*isopropylethylenediamine; *N*,*N*'-dimethylethylenediamine; *N*',*N*'-diethylethylenediamine; *N*,*N*'-diisopropylethylenediamine; *N*-propyl-1,3-propanediamine; *N*-isopropyl-1,3-propanediamine; *N*,*N*'diisopropyl-1,3-propanediamine; 2-butyl-2-ethyl-1,5-pentanediamine; *N*,*N*'-dimethyl-1,6-hexanediamine; 3,3-diamino-*N-*methyldipropylamine; *N*-(3-aminopropyl)-1,3-propanediamine; 3,3'-iminobis(*N*,*N*'-dimethylpropylamine); 1,8-diamino-*p*-menthane; 5-amino-1,3,3-trimethylcyclohexanemethylamine; 2,2-(ethylenedioxy)-bis(ethylamine); 4,9-dioxa-1,12-dodcanediamine; 4,7,10-trioxa-1,13-tridecanediamine; 3-amino-1-propanol; 4-amino-1-butanol; 2-amino-1-butanol; 5-amino-1-pentanol; 6-amino-1-hexanol; 2-amino-2-methyl-1-propanol; 2-(2-aminoethoxy)ethanol; 2-(methylamino)ethanol; DL-2-amino-1-hexanol; 2-(ethylamino)ethanol; 2-(propylamino)ethanol; 2-(*tert*-Butylamino)ethanol; Diethanolamine; Diisopropanolamine; *N*,*N*'-bis(2-hydroxyethyl)-ethylenediamine; poly(tetrahydrofuran bis(3-aminopropyl terminated); poly(propylene glycol) bis(2-aminopropyl ether); Trimethylolpropane tris[poly(propylene glcycol, amine terminated) ether; glycerol, tris[poly(propylene glycol, amine terminated)ether, poly(1,4-butanediol)bis(4-aminobenzoate); Poly(propylene glycol)bis(2-aminopropylether);Poly(1,4-butanediol)bis(4-aminobenzoate); 1,2-diaminopropane; 1,3-diaminopropane; 1,4-diaminobutane; 1,5-diaminopentane; 2,2-dimethyl-1,3-propanediamine; Hexamethylenediamine; dytek A amine; 1,7-diaminoheptane; 1,8-diaminooctane; 1,9-diaminononane; 1,10-diaminodecane; 1,12-diaminododecane; *N*-methylethylenediamine, *N*-ethylethylenediamine; *N*-propylethylethylenediamine; *N*-isopropylethylenediamine; *N*,*N*'-dimethylethylenediamine; *N*,*N*'-diethylethylenediamine; *N*,*N*'-diisopropylethylenediamine; *N*-propyl-1,3-propanediamine; *N*-isopropyl-1,3-propanediamine; *N*,*N*'diisopropyl-1,3-propanediamine; 2-butyl-2-ethyl-1,5-pentanediamine; *N*,*N*'-dimethyl-1,6-hexanediamine; 3,3-diamino-*N-*methyldipropylamine; *N*-(3-aminopropyl)-1,3-propanediamine; 3,3'-iminobis(*N*,*N*'-dimethylpropylamine); 1,8-diamino-P-menthane; 5-amino-1,3,3-trimethylcyclohexanemethylamine; 2,2-(ethylenedioxy)-bis(ethylamine); 4,9-dioxa-1,12-dodcanediamine; 4,7,10-trioxa-1,13-tridecanediamine; 3-amino-1-propanol; 4-amino-1-butanol; 2-amino-1-butanol; 5-amino-1-pentanol; 6-amino-1-hexanol; 2-amino-2-methyl-1-propanol; 2-(2-aminoethoxy)ethanol; 2-(methylamino)ethanol; DL-2-amino-1-hexanol; 2-(ethylamino)ethanol; 2-(propylamino)ethanol; 2-(*tert*-Butylamino)ethanol; Diethanolamine; Diisopropanolamine; *N*,*N*'-bis(2-hydroxyethyl)-ethylenediamine; 2-(butylamino)ethanethiol; 3-pyrrolidinol; 3-piperidinemethanol; 3-piperidineethanol; 3-piperidinepropanol; 3-piperidinebutanol; 4-hydroxypiperidine; 4,4'-trimethylenebis(1-piperidineethanol; 4,4'-trimethylenedipiperidine; 4-(aminomethyl)piperidine; 3-(4-aminobutyl)piperidine; N,N'-bis(2,2,6,6-tetramethyl-4-piperidinyl)-1,6-hexanediamine; 1,4,10-trioxa-7,13-diazacyclopentadecane; 3-aminobenzyl alcohol; 2-aminophenol; 2-aminobenzyl alcohol; 2-aminophenethyl alcohol; 2-aminothiophenol; 2-aminophenyl disulfide; 3-aminophenol; 3-aminobenzyl alcohol; 3-aminophenethyl alcohol; 3-aminothiophenol; 3-(1-hydroxyethyl)aniline; 4,4'-ethylenedianiline; 3,3'-methylenedianiline; 4,4'methylenedianiline; 4,4'-oxydianiline; 4", 4"'-(hexafluoroisopropylidene)-bis(4-phenoxyaniline); 3-aminophenol; 4-aminothiophenol; 4,4'thiodianiline; 4-aminophenethyl alcohol; *o*-tolidine; 4,4'-ethylenedi-*m*-toluidine; 5,5'-(hexafluoroisopropylidene)-di-o-toluidine; 5-amino-2-methoxyphenol; 2-amino-3-methylbenzyl alcohol; 4,4'-methylenebis(2,6-dimethylaniline); 4,4'-methylenebis(2,6-diethylaniline); 4,4'-methylenebis(2,6-diisopropylaniline); 3,3',5,5'-tetramethylbenzidine; 1,2-phenylenediamine; *N*-methyl-1,2-phenylenediamine; 2,3-diaminotoluene; 1,3-phenylenediamine; *N*,*N*'-diphenyl-1,4-phenylenediamine; *N*,*N*'-diphenylbenzidine; *N-*phenyl-1,4-phenyldiamine; *N*-methyl-4,4'-methylenedianiline; 3,3'(hexafluoroisopropylidene)dianiline; 4,4'-(hexafluoroisopropyledene)dianiline; 3,3'-dimethoxybenzidine; 3-hydroxydiphenylamine; *N*-(4-hydroxyphenyl)-2-naphthylamine; 3,3'-dimethylnaphthidine; 1,5-diaminonaphthalene; 2,7-diaminofluorene; 3,7-diamino-2-methoxyfluorene; 2-amino-9-hydroxyfluorene; 2-aminobenzylamine; 4-aminobenzylamine; Tyramine; 4,4'-diaminobenzophenone.

Examples of amine terminated molecules incorporating silicone into their matrix include, but are not limited to, poly[dimethylsiloxanes-co-methyl-(3-hydroxypropyl)siloxane-graft-poly(ethylene glycol) 3-aminopropyl ether; poly(acrylonitrile-co-butadiene) amine terminated; poly(dimethylsiloxane) amine terminated; poly(diphenylsiloxane) amine terminated; (aminopropylmethylsiloxane)-dimethylsiloxane copolymer; aminopropyl terminated poly(dimethylsiloxane); aminopropyl terminated poly(diphenylsiloxane); aminopropyl terminated poly(diethylsiloxane); *N*-ethylaminoisobutyl terminated poly(dimethylsiloxane); *N-*ethylaminoisobutyl terminated poly(diphenylsiloxane); aminopropyl terminated poly(dimethylsiloxane)-*co*-poly(diphenylsiloxane).

Any difunctional cyanate ester compound having an average of at least two cyanate ester moieties per molecule could be used as the difunctional monomer. Suitable monomers include but are not limited to: 2,2'-bis(4-cyanatophenyl)isopropylidene; 2,2'-bis(4-cyanatophenyl)-1,1,1,3,3,3-hexafluoroisopropylidene; 1,1'-bis(4-cyanatophenyl)ethane; 4,4'-Ethylidinediphenyl dicyanate; bis(4-cyanatophenyl)methane; 1,3-bis(4-cyanatophenyl)-1-(1-methylethylidene)) benzene; bis (4-cyanatophenyl)thioether; bis(4-cyanatophenyl)ether, resorcinol dicyanate, combinations thereof and the like.

In the preferred embodiment of the present invention 4,4'-ethylidinediphenyl dicyanate is the primary difunctional component of the investigated SMP and the monofunctional component of the investigated polymer system is 4-cumylphenol cyanate ester which serves to control crosslink density. The preferred amine terminated molecule is amine terminated polydimethylsiloxane. Additionally, the preferred embodiment may employ a catalyst to assist the polymerization of the two monomers. The amounts of each monomer added and the amount of the molecule terminated with a moiety containing an active hydrogen will vary depending on the physical properties desired. Additionally, a metal catalyst can be added to facilitate cure in the material. This catalyst is the same for all samples and exists in quantities of 81 parts per thousand of elemental zinc in the material.

### MODES FOR CARRYING OUT THE INVENTION

The invention will now be further described with reference to a number of specific examples which are to be regarded solely as illustrative and not as restricting the scope of the invention.

Example 1:

A polymeric reaction mixture was formulated by first mixing thoroughly 4-cumylphenyl cyanate ester (7.5% by weight of final mixture) with amine terminated polydimethylsiloxane (6.3% by weight of final mixture) to yield a pale yellow opaque solution after sufficient stirring, and then adding 4,4'-ethylidinediphenyl dicyanate (86.2% by weight of final mixture) and again mixing thoroughly to yield a clear, yellow liquid.

To aid in mixing, the solution is subjected to low heat on a hot plate while stirring. To prepare the shape memory polymer, a mold was fabricated consisting of a 3" by 3" glass plate with a Viton ring encompassing the mold area. The reaction mixture formulated above was poured into the area encircled by the Viton. The mold was sealed by placing a 3" by 3" glass plate on top of the Viton ring. The two sheets of glass were held together by clamps around the edges. The Viton spacer also acts as a sealant in the mold. The sample was heated at atmospheric pressure in an oven at 200 °C for 12 hours followed by a period at 250 °C for 3 hours. After the sample was cured for the specified period of time, it was removed from the oven and de-molded by applying a slight prying force at the edges of the mold.

At the conclusion of this polymerization process a transparent yellow-orange sheet of a cured shape memory polymer was obtained.

Example 2: (not according to the present invention)

A polymeric reaction mixture was formulated by mixing 4,4'-ethylidinediphenyl dicyanate (44.2%), 4-cumylphenol cyanate ester (40.7%) and hydroxyl terminated poly(butadiene) (15.1%) in random order to yield a pale yellow opaque solution. To aid in mixing, the resulting solution was heated at 85 °C for 4 hours with intermittent mixing to yield a clear yellow solution. To prepare the shape memory polymer a mold was fabricated consisting of a 3" by 3" glass plate with a Viton ring encompassing the mold area. The reaction mixture formulated above was poured into the area encircled by the Viton. The mold was sealed by placing a 3" by 3" glass plate on top of the Viton ring. The two sheets of glass were held together by clamps around the edges. The Viton spacer also acts as a sealant in the mold. The sample was heated at atmospheric pressure in an oven at 165 °C for 12 hours followed by a period at 220 °C for 5 hours. After the sample was cured for the specified period of time, it was removed from the oven and demolded by applying a slight prying force at the edges of the mold.

At the conclusion of this polymerization process a transparent orange sheet of a cured shape memory polymer was obtained.

Most previous uses of cyanate ester resin in space based applications do not have the ability to undergo shape change. This allows for both the part and deployment mechanism to be the same, reducing weight and space needed to send objects into space. In addition to this example, a high toughness, high temperature, thermoset resin with shape memory characteristics can be applied to many shape memory applications that require a high temperature environment or high stress environment.

A high toughness, high temperature, thermoset resin with shape memory characteristics was created. These new resins can be made having T_{g}s between 0 °C and more than 400 °C. They can be elongated as much as 60-100 % and exhibit a toughness above Tg approximately 40 times greater than that of conventional commercial cyanate ester resins such as 4, 4'-Ethylidinediphenyl dicyanate (LECy).

The cyanate ester based shape memory polymers (SMPs) are crosslinked based on a mixture of monofunctional and difunctional cyanate ester monomer and a an amine terminated molecule. Additionally some embodiments use structural modifiers and catalysts either separately or together to create a SMP with a specific transition temperature (T_{g}).

Types of catalyst that may be used include, but are not limited to, acids, bases, nitrogen or phosphorus compounds, transition metal salts or complexes, such as metal salts of aliphatic and aromatic carboxylic acids, tertiary amines, combinations thereof and the like. Particularly suitable catalysts include, for example, cobalt octoate, cobalt naphthenate, cobalt acetylacetonate (Co(AcAc)₃), zinc octoate, zinc naphthenate, tin octoate, diazobicyclo-(2,2,2)-octane, triethylamine, combinations thereof and the like, often in combination with active hydrogen containing co-catalysts. The co-catalyst both serves as a solvent for the transition metal catalyst and aids in the ring closure of the triazine ring via hydrogen transfer. Suitable co-catalysts include alkyl phenols such as nonylphenol, bisphenols, alcohols, imidazoles or aromatic amines. Special organometallic initiators such as tricarbonylcyclo-pentadienyl manganese (CpMn(CO)₃) can also be used to allow the cyanate ester SMP resins to be cured by irradiation of UV light or electron beam at a lower curing temperature. These catalysts are employed in amounts of from about 0.0001% to about 2.0%, and more preferably from about 0.01% to about 0.1% percent by weight based on total polycyanate resin.

In the preferred embodiment of the present invention 4,4'-ethylidinediphenyl dicyanate is the primary difunctional component of the SMP and the monofunctional component of the polymer system is 4-cumylphenol cyanate ester which serves to control crosslink density. The preferred amine terminated molecule is amine terminated polydimethylsiloxane. The constituents of the SMP reaction mixture are present such that the monofunctional cyanate ester monomer represents between about 5% and 80%, more preferably from 6% to 50%, the difunctional cyanate ester monomer or monomers represent between 5% and 95%, more preferably from 40% to 65%, and the amine terminated molecule represents between 1 % and 40 %, more preferably from 5 % to 26 % where all of the above recited percentages being by weight based on the total weight of the SMP mixture (100 wt%)

The SMP reaction mixture is polymerized by reacting the mixture at a temperature in the range of between 20°C and 300°C and a pressure in the range of between about 14.7 psi and about 50 psi over a time period in the range of between about 2 seconds and 4 days to produce a crosslinked SMP. Additionally other curing methods such as E-beam, radiation, light, and other processes could be used to cure the SMP mixture.

In the preferred embodiment, the polymerization reaction, to produce the thermosetting shape memory polymer of the present invention occurs at a temperature in the range between approximately 150°C and 270°C, more preferably between 180 °C and 220 °C and a pressure in the range of about 14.7 psi over a period of between about 4 hours and about 2 days, more preferably from 18 to 25 hours. The resulting SMP has a Tg of between approximately 0°C and 400°C.

The glass transition temperature of the shape memory polymer can be also be tailored by altering the mixture of monofunctional monomers, difunctional monomers and the amine terminated molecule. The transition temperature can also be tailored by the combination of different difunctional monomers such that more than one difunctional monomer is added to a single mixture. The resulting formulations all showed the ability to expand at least from 0-20% of their original size before critical deformation occurred. Additionally some formulations showed the ability to expand 0-100% of their original size before critical deformation occurred.

### INDUSTRIAL APPLICABILITY

The shape memory phenomenon in the vicinity of Tg and the ability to set the value of Tg by varying the composition over a very broad range of temperatures allows contemplation of numerous applications in varied uses including, but not limited to, molds for contact lenses manufacturing, molds for composite manufacturing, structural deployment devices for remote systems, games and toys, domestic articles, arts and ornamentation units, medical and paramedical instruments and devices, thermosensitive instruments and security devices, office equipment, garden equipment, educative articles, tricks, jokes and novelty items, building accessories, hygiene accessories, automotive accessories, films and sheets for retractable housings and packaging, coupling material for pipes of different diameters, building games accessories, folding games, scale model accessories, bath toys, boots and shoes inserts, skiing accessories, suction-devices for vacuum cleaners, pastry-making accessories, camping articles, adaptable coat hangers, retractable films and nets, sensitive window blinds, isolation and blocking joints, fuses, alarm devices, sculpture accessories, adaptable hairdressing accessories, plates for braille that can be erased, medical prosthesis, orthopedic devices, furniture, deformable rulers, recoverable printing matrix, formable casts/braces, shoes, form-fitting spandex, form-fitting clothes, self-ironing clothes, self-fluffing pillow, deployable structures, space deployable structures, satellites, and pipe replacement for underground applications.

## Claims

1. Shape memory polymer prepared from a reaction mixture comprising a monofunctional cyanate ester monomer and at least one amine terminated molecule having the structure
R₄HX - R₈ - YHR₇
Wherein X and Y can be the same or different and may be N, O, or S and R₄ and R₇ can be the same or different and may be nothing, H, or a CₛHₜ aliphatic or aromatic polymer wherein s and t are non-zero, positive whole numbers, and R₈ has the structure 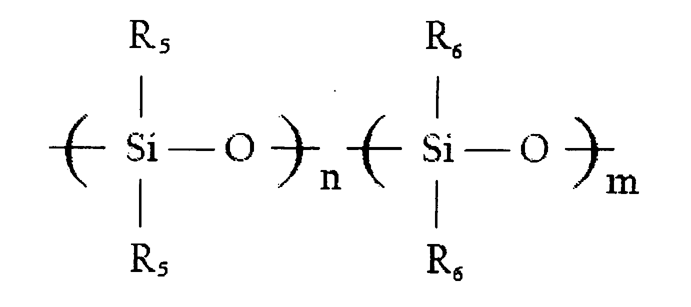 wherein n is a non-zero, positive whole number of at least 1, and wherein m can be zero or a positive, whole number, and wherein R₅ and R₆ can be the same or different and are C_{q}Hᵣ aliphatic or aromatic polymer wherein q can be any non-zero positive whole number between 1 and 10, which is then further mixed with a difunctional cyanate ester resin.

2. The shape memory polymer of claim 1 wherein said monofunctional cyanate ester monomer has only one cyanate ester moiety per molecule.

3. The shape memory polymer of claim 2 wherein said monofunctional cyanate ester monomer is selected from the group consisting of 4-methoxyphenyl cyanate ester, 4-nonylphenyl cyanate, 4-phenylphenyl cyanate, 4-cumylphenol cyanate ester, and phenyl cyanate.

4. The shape memory polymer of claim 1 wherein said amine terminated molecule is selected from the group consisting of poly[dimethylsiloxanes-co-methyl-(3-hydroxypropyl)siloxane-graft-poly(ethylene glycol) 3-aminopropyl ether; poly(acrylonitrile-co-butadiene) amine terminated; poly(dimethylsiloxane) amine terminated; poly(diphenylsiloxane) amine terminated; (aminopropylmethylsiloxane)-dimethylsiloxane copolymer; aminopropyl terminated poly(dimethylsiloxane); aminopropyl terminated poly(diphenylsiloxane); aminopropyl terminated poly(diethylsiloxane); *N*-ethylaminoisobutyl terminated poly(dimethylsiloxane); *N-*ethylaminoisobutyl terminated poly(diphenylsiloxane); aminopropyl terminated poly(dimethylsiloxane)-*co*-poly(diphenylsiloxane).

5. The shape memory polymer of claim 1 wherein said difunctional cyanate ester resin has an average of at least two cyanate ester moieties per molecule.

6. The shape memory polymer of claim 5 wherein said difunctioanl cyanate ester resin is selected from the group consisting of 2,2'-Bis(4-cyanatophenyl)isopropylidene, 2,2'-Bis(4-cyanatophenyl)-1,1,1,3,3,3-hexafluoroisopropylidene, 1,1'-Bis(4-cyanatophenyl)ethane, 4, 4'-Ethylidinediphenyl dicyanate, Bis(4-cyanatophenyl)methane, 1,3-Bis(4-cyanatophenyl)-1-(1-methylethylidene)) benzene Bis (4-cyanatophenyl)thioether, Bis(4-cyanatophenyl)ether, resorcinol dicyanate.

7. A method for preparing a shape memory polymer according to claims 1 to 6 comprising mixing a monofunctional cyanate ester monomer with at least one amine terminated molecule having the structure
R₄HX - R₈ - YHR₇
wherein X and Y can be the same or different and may be N, O, or S and R₄ and R₇ can be the same or different and are nothing, H, or a C₉Hₜ aliphatic or aromatic polymer wherein s and t are non-zero, positive whole numbers, and R₈ has the structure 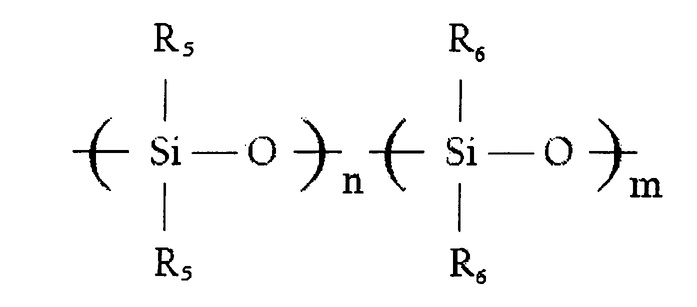 wherein n is a whole number of at least 1 and wherein m can be zero or a positive whole number and wherein R₅ and R₆ can be the same or different and may be a C_{q}Hᵣ aliphatic or aromatic polymer wherein q can be any non-zero positive whole number between 1 and 10, until the mixture reaches equilibrium which is then further mixed with a difunctional cyanate ester resin until the mixture reaches equilibrium, then curing the mixture in a mold of a desired geometric size and shape.

8. The method of claim 7 wherein said monofunctional cyanate ester monomer has only one cyanate ester moiety per molecule.

9. The method of claim 8 wherein said monofunctional cyanate ester monomer is selected from the group consisting of 4-methoxyphenyl cyanate ester, 4-nonylphenyl cyanate, 4-phenylphenyl cyanate, 4-cumylphenol cyanate ester, and phenyl cyanate.

10. The method of claim 7 wherein said amino terminated molecule is selected from the group consisting of poly[dimethylsiloxanes-co-methyl-(3-hydroxypropyl)siloxane-graft-poly(ethylene glycol) 3-aminopropyl ether; poly(acrylonitrile-co-butadiene) amine terminated; poly(dimethylsiloxane) amine terminated; poly(diphenylsiloxane) amine terminated; (aminopropylmethylsiloxane)-dimethylsiloxane copolymer; aminopropyl terminated poly(dimethylsiloxane); aminopropyl terminated poly(diphenylsiloxane); aminopropyl terminated poly(diethylsiloxane); *N*-ethylaminoisobutyl terminated poly(dimethylsiloxane); *N-*ethylaminoisobutyl terminated poly(diphenylsiloxane); aminopropyl terminated poly(dimethylsiloxane)-co-poly(diphenylsiloxane);

11. The method of claim 7 wherein said difunctional cyanate ester resin has an average of at least two cyanate ester moieties per molecule.

12. The method of claim le wherein said difunctioanl cyanate ester resin is selected from the group consisting of 2,2'-Bis(4-cyanatophenyl)isopropylidene, 2,2'-Bis(4-cyanatophenyl)-1,1,1,3,3,3-hexafluoroisopropylidene, 1,1'-Bis(4-cyanatophenyl)ethane, 4, 4'-Ethylidinediphenyl dicyanate, Bis(4-cyanatophenyl)methane, 1,3-Bis(4-cyanatophenyl)-1-(1-methylethylidene)) benzene Bis(4-cyanatophenyl)thioether, Bis(4-cyanatophenyl)ether, resorcinol dicyanate.

## Patentansprüche

1. Formgedächtnispolymer, hergestellt aus einer Reaktionsmischung, die ein monofunktionelles Cyanatestermonomer und mindestens ein Amin-terminiertes Molekül mit der folgenden Struktur umfasst:
R₄HX - R₈ - YHR₇
in der X und Y identisch oder verschieden sein können und N, O oder S sein können, und R₄ und R₇ identisch oder verschieden sein können und nichts, H oder ein aliphatisches oder aromatisches CₛHₜ-Polymer sein können, wobei s und t nicht Null und positive ganze Zahlen sind und R₈ die folgende Struktur aufweist 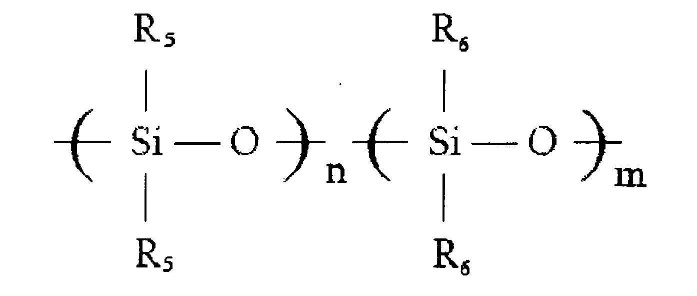 in der n nicht Null und eine positive ganze Zahl von mindestens 1 ist, und wobei m Null oder eine positive ganze Zahl sein kann, und in der R₅ und R₆ identisch oder verschieden sein können und ein aliphatisches oder aromatisches C_{q}Hᵣ-Polymer sein können, wobei q eine beliebige ganze positive Zahl zwischen 1 und 10, aber nicht Null sein kann, die dann weiter mit einem difunktionellen Cyanatesterharz vermischt wird.

2. Formgedächtnispolymer gemäß Anspruch 1, wobei genanntes monofunktionelles Cyanatestermonomer nur eine Cyanatestereinheit pro Molekül aufweist.

3. Formgedächtnispolymer gemäß Anspruch 2, wobei genanntes monofunktionelles Cyanatestermonomer aus der Gruppe bestehend aus 4-Methoxyphenylcyanatester, 4-Nonylphenylcyanat, 4-Phenylphenylcyanate, 4-Cumylphenolcyanatester und Phenylcyanat ausgewählt wird.

4. Formgedächtnispolymer gemäß Anspruch 1, wobei genanntes Amin-terminiertes Molekül aus der Gruppe bestehend aus Poly[dimethylsiloxan-co-methyl-(3-hydroxypropyl)siloxan-graft-poly(ethylenglykol)-3-amin opropylether; Amin-terminiertem Poly(acrylnitril-co-butadien); Amin-terminiertem Poly(dimethylsiloxan); Amin-terminiertem Poly(diphenylsiloxan); (Aminopropylmethylsiloxan)-dimethylsiloxan-Copolymer; Aminopropyl-terminiertem Poly(dimethylsiloxan); Aminopropyl-terminiertem Poly(diphenylsiloxan); Aminopropyl-terminiertem Poly(diethylsiloxan); N-Ethylaminoisobutyl-terminiertem Poly(dimethylsiloxan); N-Ethylaminoisobutyl-terminiertem Poly(diphenylsiloxan) und Aminopropyl-terminiertem Poly(dimethylsiloxan)-co-poly(diphenylsiloxan) ausgewählt wird.

5. Formgedächtnispolymer gemäß Anspruch 1, wobei genanntes difunktionelles Cyanatesterharz im Mittel mindestens zwei Cyanatestereinheiten pro Molekül aufweist.

6. Formgedächtnispolymer gemäß Anspruch 5, wobei genanntes difunktionelles Cyanatesterharz aus der Gruppe bestehend aus 2,2'-Bis(4-cyanatophenyl)isopropyliden, 2,2'-Bis(4-cyanatophenyl)-1,1,1,3,3,3-hexafluorisopropyliden, 1,1'-Bis(4-cyanatophenyl)ethan, 4,4'-Ethylidindiphenyldicyanat, Bis(4-cyanatophenyl)methan, 1,3-Bis(4-cyanatophenyl)-1-(1-methylethyliden))benzol, Bis(4-cyanatophenyl)thioether, Bis(4-cyanatophenyl)ether und Resorcinoldicyanat ausgewählt wird.

7. Verfahren zur Herstellung eines Formgedächtnispolymers gemäß der Ansprüche 1 bis 6, umfassend das Mischen eines monofunktionellen Cyanatestermonomers mit mindestens einem Amin-terminierten Molekül mit der folgenden Struktur
R₄HX - R₈ - YHR₇
in der X und Y identisch oder verschieden sein können und N, O oder S sein können, und R₄ und R₇ identisch oder verschieden sein können und nichts, H oder ein aliphatisches oder aromatisches CₛHₜ-Polymer sein können, wobei s und t nicht Null und positive ganze Zahlen sind und R₈ die folgende Struktur aufweist 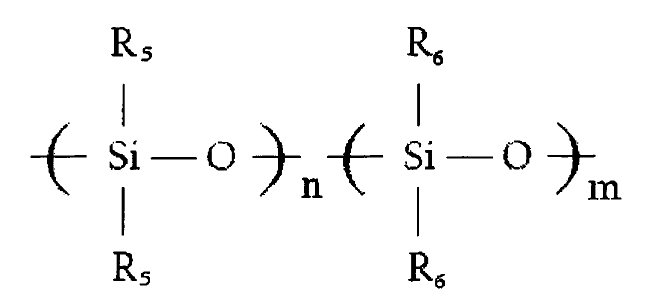 in der n nicht Null und eine positive ganze Zahl von mindestens 1 ist, und wobei m Null oder eine positive ganze Zahl sein kann, und in der R₅ und R₆ identisch oder verschieden sein können und ein aliphatisches oder aromatisches C_{q}Hᵣ-Polymer sein können, wobei q eine beliebige ganze positive Zahl zwischen 1 und 10, aber nicht Null sein kann, bis die Mischung ein Gleichgewicht erreicht, das dann weiter mit einem difunktionellen Cyanatesterharz vermischt wird, bis die Mischung ein Gleichgewicht erreicht, und anschließend das Härten der Mischung in einer Gießform einer gewünschten geometrischen Form und Größe.

8. Verfahren gemäß Anspruch 7, wobei genanntes monofunktionelles Cyanatestermonomer nur eine Cyanatestereinheit pro Molekül aufweist.

9. Verfahren gemäß Anspruch 8, wobei genanntes monofunktionelles Cyanatestermonomer aus der Gruppe bestehend aus 4-Methoxyphenylcyanatester, 4-Nonylphenylcyanat, 4-Phenylphenylcyanate, 4-Cumylphenolcyanatester und Phenylcyanat ausgewählt wird.

10. Verfahren gemäß Anspruch 7, wobei genanntes Amin-terminiertes Molekül aus der Gruppe bestehend aus Poly[dimethylsiloxan-co-methyl-(3-hydroxypropyl)siloxan-graft-poly(ethylenglykol)-3-amin opropylether; Amin-terminiertem Poly(acrylnitril-co-butadien); Amin-terminiertem Poly(dimethylsiloxan); Amin-terminiertem Poly(diphenylsiloxan); (Aminopropylmethylsiloxan)-dimethylsiloxan-Copolymer; Aminopropyl-terminiertem Poly(dimethylsiloxan); Aminopropyl-terminiertem Poly(diphenylsiloxan); Aminopropyl-terminiertem Poly(diethylsiloxan); N-Ethylaminoisobutyl-terminiertem Poly(dimethylsiloxan); N-Ethylaminoisobutyl-terminiertem Poly(diphenylsiloxan) und Aminopropyl-terminiertem Poly(dimethylsiloxan)-co-poly(diphenylsiloxan) ausgewählt wird.

11. Verfahren gemäß Anspruch 7, wobei genanntes difunktionelles Cyanatesterharz im Mittel mindestens zwei Cyanatestereinheiten pro Molekül aufweist.

12. Verfahren gemäß Anspruch 11, wobei genanntes difunktionelles Cyanatesterharz aus der Gruppe bestehend aus 2,2'-Bis(4-cyanatophenyl)isopropyliden, 2,2'-Bis(4-cyanatophenyl)-1,1,1,3,3,3-hexafluorisopropyliden, 1,1'-Bis(4-cyanatophenyl)ethan, 4,4'-Ethylidindiphenyldicyanat, Bis(4-cyanatophenyl)methan, 1,3-Bis(4-cyanatophenyl)-1-(1-methylethyliden))benzol, Bis(4-cyanatophenyl)thioether, Bis(4-cyanatophenyl)ether und Resorcinoldicyanat ausgewählt wird.

## Revendications

1. Polymère à mémoire de forme préparé à partir d'un mélange réactionnel comprenant un monomère d'ester cyanate monofonctionnel et au moins une molécule à terminaison amine de structure
R₄HX-R₈-YHR₇
dans laquelle X et Y peuvent être identiques ou différents et peuvent être N, O ou S, et R₄ et R₇ peuvent être identiques ou différents et peuvent être absents, H, ou un polymère aliphatique ou aromatique en CₛHₜ où s et t sont des nombres entiers positifs non nuls, et R₈ a la structure : 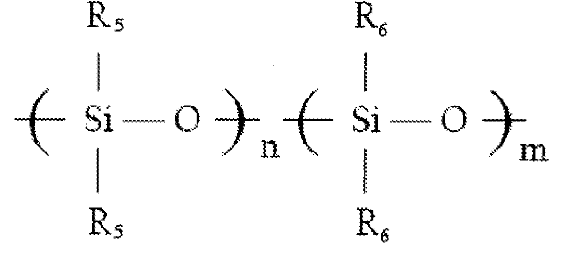 dans laquelle n est un nombre entier positif non nul valant au moins 1, et m peut être zéro ou un nombre entier positif, et R₅ et R₆ peuvent être identiques ou différents et sont un polymère aliphatique ou aromatique en C_{q}Hₜ où q peut être n'importe quel nombre entier positif non nul compris entre 1 et 10,
qui est ensuite en outre mélangé avec une résine d'ester cyanate difonctionnel.

2. Polymère à mémoire de forme selon la revendication 1, dans lequel ledit monomère d'ester cyanate monofonctionnel n'a qu'un seul fragment ester cyanate par molécule.

3. Polymère à mémoire de forme selon la revendication 2, dans lequel ledit monomère ester cyanate monofonctionnel est choisi dans le groupe constitué par l'ester cyanate de 4-méthoxyphényle, le cyanate de 4-nonylphényle, le cyanate de 4-phénylphényle, l'ester cyanate de 4-cumylphénol, et le cyanate de phényle.

4. Polymère à mémoire de forme selon la revendication 1, dans lequel ladite molécule à terminaison amine est choisie dans le groupe constitué par un copolymère de diméthylsiloxane et d'éther 3-aminopropylique de polyéthylèneglycol greffé de méthyl(3-hydroxypropyl)siloxane ; un copolymère d'acrylonitrile et de butadiène à terminaison amine ; un polydiméthylsiloxane à terminaison amine ; un polydiphénylsiloxane à terminaison amine ; un copolymère d'aminopropylméthyl-siloxane et de diméthylsiloxane ; un polydiméthylsiloxane à terminaison aminopropyle ; un polydiphénylsiloxane à terminaison aminopropyle ; un polydiéthylsiloxane à terminaison aminopropyle ; un polydiméthylsiloxane à terminaison N-éthylaminoisobutyle ; un polydiphényl-siloxane à terminaison N-éthylaminoisobutyle ; un copolymère de polydiméthylsiloxane et de polydiphénylsiloxane à terminaison aminopropyle.

5. Polymère à mémoire de forme selon la revendication 1, dans lequel ladite résine d'ester cyanate difonctionnel a en moyenne au moins deux fragments ester cyanate par molécule.

6. Polymère à mémoire de forme selon la revendication 5, dans lequel ladite résine d'ester cyanate difonctionnel est choisie dans le groupe constitué par le 2,2'-bis(4-cyanatophényl)isopropylidène, le 2,2'-bis(4-cyanatophényl)-1,1,1,3,3,3-hexafluoroisopropylidène, le 1,1'-bis(4-cyanatophényl)éthane, le dicyanate de 4,4'-éthylidinediphényle, le bis(4-cyanatophényl)méthane , le 1,3-bis(4-cyanatophényl)-1-(1-méthyléthylidène))benzène-bis(4-cyanatophényl)thioéther, le bis(4-cyanatophényl)-éther, le dicyanate de résorcinol.

7. Procédé pour préparer un polymère à mémoire de forme selon les revendications 1 à 6, comprenant le mélange d'un monomère d'ester cyanate fonctionnel avec au moins une molécule à terminaison amine de structure
R₄HX-R₈-YHR₇
dans laquelle X et Y peuvent être identiques ou différents et peuvent être N, O ou S, et R₄ et R₇ peuvent être identiques ou différents et peuvent être absents, H, ou un polymère aliphatique ou aromatique en CₛHₜ où s et t sont des nombres entiers positifs non nuls, et R₈ a la structure : 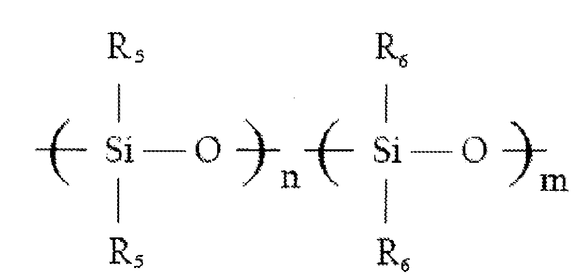 dans laquelle n est un nombre entier positif non nul valant au moins 1, et m peut être zéro ou un nombre entier positif, et R₅ et R₆ peuvent être identiques ou différents et sont un polymère aliphatique ou aromatique en C_{q}Hₜ où q peut être n'importe quel nombre entier positif non nul compris entre 1 et 10,
jusqu'à ce que le mélange atteigne l'équilibre, après quoi il est encore mélangé avec une résine d'ester cyanate difonctionnel jusqu'à ce que le mélange atteigne l'équilibre, opération suivie du durcissement du mélange dans un moule ayant une forme et une taille géométrique souhaitées.

8. Procédé selon la revendication 7, dans lequel ledit monomère d'ester cyanate monofonctionnel a un seul fragment ester cyanate par molécule.

9. Procédé selon la revendication 8, dans lequel ledit monomère d'ester cyanate monofonctionnel est choisi dans le groupe constitué par l'ester cyanate de 4-méthoxyphényle, le cyanate de 4-nonylphényle, le cyanate de 4-phénylphényle, l'ester cyanate de 4-cumylphénol, et le cyanate de phényle.

10. Procédé selon la revendication 7, dans lequel ladite molécule à terminaison amine est choisie dans le groupe constitué par un copolymère de diméthylsiloxane et d'éther 3-aminopropylique de polyéthylèneglycol greffé de méthyl(3-hydroxypropyl)siloxane ; un copolymère d'acrylonitrile et de butadiène à terminaison amine ; un polydiméthylsiloxane à terminaison amine ; un polydiphénylsiloxane à terminaison amine ; un copolymère d'aminopropylméthylsiloxane et de diméthylsiloxane ; un polydiméthylsiloxane à terminaison aminopropyle ; un polydiphénylsiloxane à terminaison aminopropyle ; un polydiéthylsiloxane à terminaison aminopropyle ; un polydiméthylsiloxane à terminaison N-éthylaminoisobutyle ; un polydiphénylsiloxane à terminaison N-éthylaminoiso-butyle ; un copolymère de polydiméthylsiloxane et de polydiphénylsiloxane à terminaison aminopropyle.

11. Procédé selon la revendication 7, dans lequel ladite résine d'ester cyanate difonctionnel a en moyenne au moins deux fragments ester cyanate par molécule.

12. Procédé selon la revendication 11, dans lequel ladite résine d'ester cyanate difonctionnel est choisie dans le groupe constitué par le 2,2'-bis(4-cyanatophényl)-isopropylidène, le 2,2'-bis(4-cyanatophényl)-1,1,1,3,3,3-hexafluoroisopropylidène, le 1,1'-bis(4-cyanatophényl)-éthane, le dicyanate de 4,4'-éthylidinediphényle, le bis(4-cyanatophényl)méthane, le 1,3-bis(4-cyanatophényl)-1-(1-méthyléthylidène))benzène-bis(4-cyanatophényl)thio-éther, le bis(4-cyanatophényl)éther, le dicyanate de résorcinol.
